# EUROPÄISCHE PATENTSCHRIFT

(11) **EP 0 877 841 B1**
(45) Veröffentlichungstag und Bekanntmachung des Hinweises auf die Patenterteilung: **13.07.2005**
(21) Anmeldenummer: 97948862.4
(22) Anmeldetag: 03.11.1997
(51) Int. Cl.: E04B 1/68

(54) **DICHTUNGSBAHNEN**
DAMP-PROOFED LAYERS
PANNEAUX D'ETANCHEITE

(30) Priorität: 12.11.1996 DE 29619576 U
(43) Veröffentlichungstag der Anmeldung: 18.11.1998
(73) Patentinhaber: Henkel Kommanditgesellschaft auf Aktien, 40589 Düsseldorf (DE)
(72) Erfinder: SIMONIS, Udo, D-63549 Ronneburg (DE); BENKHOFF, Hermann, D-27356 Rotenburg (DE)
(86) Internationale Anmeldenummer: PCT/EP1997/006055
(87) Internationale Veröffentlichungsnummer: WO 1998/021423

(56) Entgegenhaltungen:
- WO-A-94/18407
- DE-U- 8 900 465

## Beschreibung

### Einleitung

Die Erfindung betrifft Dichtungsbahnen zur Abdichtung im Baubereich, insbesondere für Abdichtungen von Übergängen zwischen Baukörpern und Bauelementen, bestehend aus einer Trägerschicht und einer hochselbstklebenden Klebeschicht, welche Nuten aufweist.

### Stand der Technik

Beim Errichten von Gebäuden werden Bauelemente wie beispielsweise Fenster, Türen, Lichtkuppeln, Schornsteine und Fassaden, die aus den unterschiedlichsten Materialien bestehen, mit dem Baukörper verbunden. Da verschiedene Materialien auch unterschiedliche materialspezifische Wärmeausdehnungskoeffizienten besitzen, ist es erforderlich, zwischen den verschiedenen Bauelementen Dehnungsfugen vorzusehen. Diese, auch Dehnstöße genannten Unterbrechungen der schützenden Außenhaut des Gebäudes müssen nun separat abgedichtet werden.

Aus dem Stand der Technik sind verschiedene Verfahren bekannt, um eine solche Abdichtung zu erreichen. Sehr gebräuchlich sind sogenannte Montageschäume, üblicherweise auf Basis von Polyurethan, mit denen die Dehnstöße ausgeschäumt werden können. Dieses Verfahren läßt sich schnell und leicht durchführen, die Schäume weisen jedoch den Nachteil auf, daß durch die enthaltenden Poren Feuchtigkeit eindringen kann und somit die Isolierwirkung nicht mehr besteht.

Eine weitere Methode der Abdichtung der Übergangsfugen bedient sich porenfreier elastischer Formmassen. Das Eindringen von Feuchtigkeit von Außen ist damit ausgeschlossen, gleichzeitig wird jedoch jede Luftzirkulation verhindert, wodurch es im Mauerwerk zu Fäulnis oder aber auch zu Frostschäden kommen kann.

Daneben sind auch Methoden bekannt, bei denen zunächst ein Kleber in die Fugen gegeben wird und anschließend eine verbindende Dichtungsbahn für den dichten Abschluß sorgt. Hierzu sind jedoch zwei Arbeitsschritte erforderlich, und insbesondere das Aufbringen des Klebers gelingt unter den gegebenen Arbeitsbedingungen häufig nicht zufriedenstellen. Es werden im allgemeinen extreme Mengen Kleber verbraucht, gleichzeitig verhindert diese Art der Abdichtung einen Dampfdruckausgleich zwischen dem Fugeninnenraum und der Umgebung, wodurch es beispielsweise zur Schimmelbildung kommen kann.

Neben der Befestigung von Dichtungsbahnen mittels eines Klebers kann auch eine mechanische Befestigung erfolgen. Dazu wird die Dichtungsbahn z.B. mit einer Schraub-, Klemm-, oder Quetschverbindung befestigt. Der Dampfdruckausgleich ist bei einer derartigen Abdichtung gewährleistet, jedoch ist das Anbringen sehr zeitaufwendig und da die Dichtungsbahn durchdrungen wird, muß hier eine erneute Abdichtung erfolgen.

Eine spezielle Form der Abdichtung wird mit Blechprofilen realisiert. Diese werden bevorzugt bei Türübergängen z.B. im Terassenbereich eingesetzt. Diese Form der Abdichtung ist sehr teuer und zeitaufwendig. Sie wird auch dort eingesetzt, wo es zum Kontakt mit Bitumen kommt und daher der Einsatz von bitumenunverträglichen Materialien, wie der häufig eingesetzten Dichtungsbahnen aus PVC-P-NB nicht möglich ist.

In DE-U-89 00 465 wird ein Dichtungsband aus einem Folienband beschrieben, welches im Randbereich vorbeschichtet ist mit zwei parallelen Haftstreifen aus einer Kleb- und Dichtungsmasse.

In WO-A-94/18407 wird ein Laminat zum Abdichten von äußeren Gebäude-Oberflächen beschrieben, welches eine flexible Dichtungsschicht mit winzigen Durchlässen für Wasserdampf hat, die aber für Wasser und Luft undurchlässig sind, wobei die Dichtungsschicht entlang jeder Seite eine Schicht eines Haftklebstoffes hat.

Die komplexe Aufgabe der vorliegenden Erfindung war es daher, Dichtungsbahnen zur Verfügung zu stellen, die sich leicht und schnell anbringen lassen, den Übergang zwischen möglichst vielen unterschiedlichen Materialien ermöglichen, gleichzeitig für eine gute Abdichtung sorgen und einen Dampfdruckausgleich ermöglichen.

### Beschreibung der Erfindung

Gegenstand der Erfindung sind demnach Dichtungsbahnen zur Abdichtung im Baubereich, insbesondere für Abdichtungen von Übergängen zwischen Baukörpern und Bauelementen, bestehend aus einer Trägerschicht und einer hochselbstklebenden Klebeschicht, welche Nuten aufweist.

Es wurde nun überraschenderweise gefunden, daß die erfindungsgemäßen Dichtungsbahnen eine gute Abdichtung ermöglichen und gleichzeitig durch die Nuten den Dampfdruckausgleich ermöglichen.

Da die Dichtungsbahn bei der Herstellung bereits mit der Klebeschicht ausgestattet wird, entfällt die zusätzliche Arbeit vor Ort und es wird eine gleichmäßigere Verteilung der Klebeschicht erreicht.

### Trägerschicht

Die erfindungsgemäß einzusetzenden Trägerschichten sind vorzugsweise aus den aus dem Stand der Technik für Dachbahnen bekannten Materialien wie beispielsweise, Chlorsulfoniertes Polyethylen (CSM), Ethylencopolymerisat-Bitumen (ECB), Ethylen-Propylen-Terpolymer-Kautschuk (EPDM), Ethylen-Vinylacetat-Terpolymer (EVA), Legierung aus flexiblen Polyolefinen (FPO), Chloriertes Polyethylen (PE-C), Polyisobutylen (PIB), Polyvinylchlorid weich (PVC-P). Besonders bevorzugt sind Trägerschichten auf Basis des von weichem Polyvinylchlorid, welche mittels Quell- und/ oder Heißluftschweißverfahren mit den üblichen Dachbahnen aus weichem PVC problemlos verbinden lassen und damit dichte Übergänge ermöglichen. Insbesondere werden solche Trägerschichten eingesetzt, die bitumenbeständig sind, wobei vorzugsweise polymerweichgemachtes PVC (PVC-p) eingesetzt wird. Die genannten Materialien können zur Verbesserung der Gebrauchseigenschaften mittels der üblichen Additive modifiziert werden **(Taschenbuch der Kunststoffadditive von Gächter/Müller, 2. Auflage, Carl Hanser Verlag München Wien, 1983).**

Die Dicke der Trägerschicht beträgt vorzugsweise 0,8 bis 3, insbesondere 1 bis 2 mm.

### Klebeschicht

Der für die Klebeschicht erfindungsgemäß zu verwendende Kleber zeichnet sich dadurch aus, daß er hochselbstklebend ist. Unter der Klebkraft ist diejenige Kraft zu verstehen, die notwendig ist, um eine bestimmte Klebeschicht von einem definierten Untergrund zu lösen. Klebkräfte werden i.a. empirisch ermittelt und sind für den Baubereich folgendermaßen eingestuft:

| | |
|---|---|
| < 5 N/cm | ungeeignet für den Bau |
| 5 bis 7 N/cm | eingeschränkt für den Bau geeignet |
| > 7 N/ cm | für alle üblichen Bereiche im Bau geeignet. |

Unter einem hochselbstklebenden Kleber ist im Sinne der vorliegenden Erfindung ein Kleber mit einer Klebkraft von minestens 10 N/cm zu verstehen. Bevorzugt werden Kleber mit einer Klebkraft von 10 bis 20 N/cm eingesetzt. Erfindungsgemäß eignen sich alle aus dem Stand der Technik bekannten, hochselbstklebenden Kleber. Insbesondere sind darunter zu verstehen: Phenolharze (Bakelite), Bituminas, SBS, besonders bevorzugt sind Kleber aus modifiziertem Kautschuk, wie beispielsweise Ethylen-Propylen-Terpolymer-Kautschuk (EPDM), StyrolButadien-Kautschuk (SBR), Acrylnitril-Butadien-Kautschuk (NBR) und insbesondere Butylkautschuk (IIR). Die Kleber können einzeln aber auch in Kombination verwendet werden. Zusätzlich können die Kleber noch die üblichen, aus dem Stand der Technik bekannten Additive enthalten **(Taschenbuch der Kunststoffadditive von Gächter/Müller, 2. Auflage, Carl Hanscr Verlag München Wien, 1983).**

Erfindungsgemäß ist die Klebeschicht in Laufrichtung von streifenförmiger Geometrie, d.h. es bilden sich darin Rillen bzw. Nuten aus. Die Gesamtdicke der Klebeschicht beträgt vorzugsweise 0,1 bis 3, insbesondere 0,3 bis 1,5 mm. Die Nuten können in Produktionsrichtung oder in einem Winkel von 10 bis 80 °, vorzugsweise 25 bis 75° zur Produktionsrichtung verlaufen. Es können auch beispielsweise den Nuten in Produktionsrichtung solche mit einem Winkel zwischen 10 und 80° überlagert sein.

Die Breite der Klebeschichtstege beträgt bevorzugt 10 bis 30, besonders bevorzugt 15 bis 25 mm, die entsprechenden Klebeschichtnuten weisen vorzugsweise eine Breite von 2 bis 10, insbesondere 5 bis 8 mm auf. Die Höhendifferenz zwischen Nute und Steg kann 0,1 bis 2,9, vorzugsweise 0,3 bis 1,2 mm betragen.

| **Beispiele** | | | |
|---|---|---|---|
| Eigenschaften | **Beispiel 1:** PVC-p-BV¹hochselbstklebend | **Vergleichsbeispiel 1:** PVC-p-NB | **Vergleichsbeispiel 2:** PUR-Schaum |
| Dampfdruckausgleich | ++ | 0 | - |
| Kleberverbrauch | ++ | -- | ++ |
| Bitumenbeständigkeit | ++ | -- | + |
| Montagefreundlichkeit | + | -- | ++ |
| Klebkraft zu üblichen Baumaterialien | ++ | ²) | 0 |
| Feuchtigkeitsaufnahme der Abdichtmasse | ++ | ++ | - |

| | | | |
|---|---|---|---|
| ¹) Klebeschicht: Butylkautschuk | | | |
| ²) abhängig vom eingesetzten Kleber ++ : sehr gut + : gut +/- : befriedigend - : ausreichend -- : mangelhaft 0 : nicht vorhanden | | | |

## Patentansprüche

1. Dichtungsbahn zur Abdichtung im Baubereich bestehend aus einer Trägerschicht und einer hochselbstklebenden Klebeschicht, welche Nuten aufweist.

2. Dichtungsbahn nach Anspruch 1, **dadurch gekennzeichnet, daß** die Trägerschicht aus einem Material ausgewählt aus der Gruppe ist, die gebildet wird von weichem Polyvinylchlorid, EPDM und/ oder Legierung aus flexiblen Polyolefinen ist.

3. Dichtungsbahn nach den Ansprüchen 1 und 2, **dadurch gekennzeichnet, daß** die Trägerschicht bitumenbeständig ist.

4. Dichtungsbahn nach den Ansprüchen 1 bis 3, **dadurch gekennzeichnet, daß** die Klebeschicht modifizierten Kautschuk enthält.

5. Dichtungsbahn nach den Ansprüchen 1 bis 4, **dadurch gekennzeichnet, daß** die Nuten in Produktionsrichtung der Trägerbahn verlaufen.

6. Dichtungsbahn nach den Ansprüchen 1 bis 5, **dadurch gekennzeichnet, daß** zusätzliche Nuten, vorhanden sind, die in einem Winkel von 25 bis 75° zur Produktionsrichtung verlaufen.

7. Dichtungsbahn nach den Ansprüchen 1 bis 6, **dadurch gekennzeichnet, daß** die Nuten 2 bis 10 mm breit sind.

8. Dichtungsbahn nach den Ansprüchen 1 bis 7, **dadurch gekennzeichnet, daß** die zwischen den Nuten verlaufenden Stege 10 bis 30 mm breit sind.

9. Dichtungsbahn nach den Ansprüchen 1 bis 8, **dadurch gekennzeichnet, daß** die Höhendifferenz zwischen Nute und Steg 0, 1 bis 2,9 mm beträgt.

10. Dichtungsbahn nach den Ansprüchen 1 bis 9, **dadurch gekennzeichnet, daß** die Klebeschichtdicke 0,1 bis 3,0 mm beträgt.

## Claims

1. Sealing strip for sealing in the construction industry consisting of a carrier layer and a highly self-adhesive adhesive layer which has grooves.

2. A sealing strip as claimed in claim 1, **characterized in that** the carrier layer consists of a material selected from the group consisting of flexible polyvinyl chloride, EPDM and/or an alloy of flexible polyolefins.

3. A sealing strip as claimed in claims 1 and 2, **characterized in that** the carrier layer is bitumen-resistant.

4. A sealing strip as claimed in claims 1 to 3, **characterized in that** the adhesive layer contains modified rubber.

5. A sealing strip as claimed in claims 1 to 4, **characterized in that** the grooves extend in the production direction of the carrier layer.

6. A sealing strip as claimed in claims 1 to 5, **characterized in that** additional grooves extending at an angle of 25 to 75° to the production direction are present.

7. A sealing strip as claimed in claims 1 to 6, **characterized in that** the grooves are 2 to 10 mm wide.

8. A sealing strip as claimed in claims 1 to 7, **characterized in that** the lands between the grooves are 10 to 30 mm wide.

9. A sealing strip as claimed in claims 1 to 8, **characterized in that** the difference in height between groove and land is 0.1 to 2.9 mm.

10. A sealing strip as claimed in claims 1 to 9, **characterized in that** the adhesive layer is 0.1 to 3.0 mm thick.

## Revendications

1. Panneau d'étanchéité pour l'étanchéité dans la zone de construction comprenant une couche support et une couche collante très auto-adhésive, qui présente des rainures.

2. Panneau d'étanchéité selon la revendication 1, **caractérisé en ce que** la couche support est à base d'un matériau choisi dans le groupe qui est formé de chlorure de polyvinyle souple, de EPDM et/ou d'alliage à base de polyoléfines flexibles.

3. Panneau d'étanchéité selon les revendications 1 et 2, caracténsé en ce que la couche support est résistante au bitume.

4. Panneau d'étanchéité selon les revendications 1 à 3, **caractérisé en ce que** la couche adhésive contient du caoutchouc modifié

5. Panneau d'étanchéité selon les revendications 1 à 4, **caractérisé en ce que** les rainures sont agencées dans le sens de production du panneau support.

6. Panneau d'étanchéité selon les revendications 1 à 5, **caractérisé en ce que** des rainures supplémentaires sont présentes, lesquelles sont agencées dans un angle de 25° à 75° par rapport au sens de production.

7. Panneau d'étanchéité selon les revendications 1 à 6, **caractérisé en ce que** les rainures font 2 à 10 mm de largeur.

8. Panneau d'étanchéité selon les revendications 1 à 7, **caractérisé en ce que** les ponts agencés entre les rainures ont une largeur de 10 à 30 mm

9. Panneau d'étanchéité selon les revendications 1 à 8, **caractérisé en ce que** la différence de hauteur entre rainure et pont va de 0,1 à 2,9 mm.

10. Panneau d'étanchéité selon les revendications 1 à 9, **caractérisé en ce que** l'épaisseur de la couche collante va de 0,1 à 3,0 mm.
